# EUROPEAN PATENT APPLICATION

(11) **EP 4 404 341 A1**
(43) Date of publication of application: **24.07.2024**
(21) Application number: 22946240.3
(22) Date of filing: 16.06.2022
(51) Int. Cl.: H01M 50/131, H01M 50/15

(54) **END CAP ASSEMBLY, BATTERY CELL, BATTERY, AND ELECTRIC DEVICE**

(71) Applicant: Contemporary Amperex Technology Co., Limited, Ningde, Fujian 352100 (CN)
(72) Inventor: ZHOU, Wenlin, Ningde, Fujian 352100 (CN); XU, Liangfan, Ningde, Fujian 352100 (CN); YANG, Daowei, Ningde, Fujian 352100 (CN); ZHOU, Jian, Ningde, Fujian 352100 (CN); LI, Quankun, Ningde, Fujian 352100 (CN); WANG, Peng, Ningde, Fujian 352100 (CN)
(74) Representative: Gong, Jinping
(86) International application number: PCT/CN2022/099228
(87) International publication number: WO 2023/240551

(57) **Abstract**

The present application provides an end cover assembly, a battery cell, a battery, and an electrical device, relating to the field of batteries. The end cover assembly includes an end cover, a groove, and a reinforcing portion. The end cover has a first surface and a second surface opposite in its thickness direction. The groove is recessed from the first surface in a direction towards the second surface. The reinforcing portion protrudes from the first surface and/or the second surface, and surrounds the groove. In the end cover assembly, the reinforcing portion is disposed on the end cover to increase the strength and stiffness of the end cover and improve impact resistance of the end cover, so that the end cover deforms little when subjected to an impact, which alleviates damage to an electrode assembly by the deformation of the end cover. In addition, the groove is disposed in the end cover of the end cover assembly to reduce the weight of the end cover, so that the weight of the end cover is not significantly different or the same before and after the reinforcing portion is disposed. The reinforcing portion surrounds the groove to increase the stiffness and strength of a position where the groove is disposed, without significantly increasing the weight of the end cover assembly.

## Description

### Technical Field

The present application relates to the field of batteries, in particular to an end cover assembly, a battery cell, a battery, and an electrical device.

### Background Art

Batteries are widely used in the field of new energy, such as electric vehicles and new energy vehicles, which have become a new trend in the development of the automotive industry. A battery cell includes an end cover, an electrode assembly, and a shell, where the end cover and the shell cooperate to form an internal environment of the battery cell, and the electrode assembly is accommodated in the internal environment. However, in a scenario where the battery cell is inverted, the electrode assembly is often damaged, leading to failure of the battery cell.

### Summary

Embodiments of the present application aim to provide an end cover assembly, a battery cell, a battery, and an electrical device, in order to alleviate a problem in related technologies that an electrode assembly is often damaged in a scenario where a battery cell is inverted.

In a first aspect, an embodiment of the present application provides an end cover assembly, which includes an end cover, a groove, and a reinforcing portion, where the end cover has a first surface and a second surface opposite in its thickness direction; the groove is recessed from the first surface in a direction towards the second surface; and the reinforcing portion protrudes from the first surface and/or the second surface and surrounds the groove.

In the foregoing technical solution, the reinforcing portion is disposed on the end cover of the end cover assembly to increase the strength and stiffness of the end cover and improve impact resistance of the end cover, so that the end cover deforms little when subjected to an impact, which alleviates damage to an electrode assembly by the deformation of the end cover. In addition, the groove is disposed in the end cover of the end cover assembly to reduce the weight of the end cover, so that the weight of the end cover is not significantly different or the same before and after the reinforcing portion is disposed. The reinforcing portion surrounds the groove to increase the stiffness and strength of a position where the groove is disposed, without significantly increasing the weight of the end cover assembly.

As an optional technical solution of the embodiments of the present application, in the thickness direction, the distance between the first surface and the second surface is D, and the distance between a bottom surface of the groove and the first surface is d, satisfying 0.1 ≤ d/D ≤ 0.6.

In the foregoing technical solution, in the thickness direction, the distance between the first surface and the second surface may also be understood as a thickness of the end cover. In the thickness direction, the distance between the bottom surface of the groove and the first surface may also be understood as a depth of the groove. The depth of the groove is 0.1-0.6 times the thickness of the end cover. This achieves a good weight reduction effect and does not significantly weaken the strength of the end cover. If d/D < 0.1, the groove is shallow and the weight reduction effect is poor. If d/D > 0.6, the groove is deep, and much strength of the end cover is weakened, resulting in poor strength of the end cover even if the reinforcing portion is disposed.

As an optional technical solution of the embodiments of the present application, the end cover is provided with a convex portion and a concave portion, the convex portion protrudes from the second surface, the concave portion is recessed from the first surface in a direction towards the second surface, and the concave portion corresponds to the convex portion; and in the thickness direction, projections of the convex portion and the reinforcing portion on the end cover do not overlap.

In the foregoing technical solution, the convex portion is formed on the second surface, and the concave portion is formed at a position corresponding to the convex portion on the first surface. On the one hand, the concave portion can accommodate the components inside the battery cell, which is beneficial to increasing the energy density of the battery cell. On the other hand, the convex portion can increase the flexural strength of the end cover and improve the impact resistance of the end cover. The projections of the reinforcing portion and the convex portion on the end cover in the thickness direction do not overlap, that is, the reinforcing portion and the convex portion are spaced or misaligned within a plane perpendicular to the thickness direction, to increase the strength and stiffness of different positions of the end cover, and to improve the impact resistance of the end cover, so as to alleviate damage to the electrode assembly by the deformation of the end cover.

As an optional technical solution of the embodiments of the present application, the end cover assembly includes an electrode terminal disposed on the convex portion.

In the foregoing technical solution, the electrode terminal may be electrically connected to the electrode assembly inside the battery cell. The electrode terminal is disposed on the convex portion, so that the electrode assembly is partially accommodated in the concave portion to increase the energy density of the battery cell. In addition, the electrode terminal disposed on the convex portion with strong impact resistance is less susceptible to damage due to the deformation of the end cover.

As an optional technical solution of the embodiments of the present application, the reinforcing portions are disposed on two sides of the convex portion in a first direction, the first direction being perpendicular to the thickness direction.

In the foregoing technical solution, the reinforcing portions are disposed on the two sides of the convex portion in the first direction to increase the strength and stiffness of the end cover and improve the impact resistance of the end cover, so that the end cover deforms little when subjected to an impact, which alleviates damage to the electrode assembly by the deformation of the end cover.

As an optional technical solution of the embodiments of the present application, the first direction is a length direction of the end cover.

In the foregoing technical solution, compared with the width direction of the end cover, the length direction of the end cover is more prone to deformation due to impact. The reinforcing portions are disposed on the two sides of the convex portion in the length direction to reinforce the impact resistance of the end cover in the length direction, so as to alleviate damage to the electrode assembly by the deformation of the end cover.

As an optional technical solution of the embodiments of the present application, the end cover assembly includes: a pressure relief mechanism disposed on the end cover, where in the thickness direction, projections of the pressure relief mechanism and the reinforcing portion on the end cover do not overlap.

In the foregoing technical solution, the pressure relief mechanism can open when the internal pressure of the battery cell reaches a detonation pressure to release the internal pressure of the battery cell. The projections of the pressure relief mechanism and the reinforcing portion on the end cover in the thickness direction do not overlap, so that the pressure relief mechanism and the reinforcing portion do not interfere with each other to prevent the reinforcing portion from affecting the pressure relief function of the pressure relief mechanism.

As an optional technical solution of the embodiments of the present application, the reinforcing portion is of a continuous structure disposed in a circumferential direction of the groove.

In the foregoing technical solution, the reinforcing portion is of a continuous structure disposed in the circumferential direction of the groove, so that the reinforcing portion has better entirety and good reinforcing effect.

As an optional technical solution of the embodiments of the present application, the reinforcing portion is of a discontinuous structure disposed in the circumferential direction of the groove.

In the foregoing technical solution, the reinforcing portion is of a discontinuous structure disposed in the circumferential direction of the groove, so that the reinforcing portion can avoid other components and will not interfere with the other components.

As an optional technical solution of the embodiments of the present application, the reinforcing portion includes a plurality of reinforcing segments spaced in the circumferential direction.

In the foregoing technical solution, by configuring the plurality of reinforcing segments, the reinforcing segments increases the strength and stiffness of the end cover and can avoid other components of the battery cell to avoid interference with the other components. In addition, the plurality of reinforcing segments are lighter than the continuous structure, which is beneficial to increasing the strength and stiffness of the end cover assembly without significantly increasing its weight.

As an optional technical solution of the embodiments of the present application, the end cover assembly includes a plurality of grooves, where the reinforcing portions correspond to the grooves one to one.

In the foregoing technical solution, the plurality of reinforcing portions and the plurality of grooves improve the reinforcing effect on the strength and stiffness of the end cover.

As an optional technical solution of the embodiments of the present application, the end cover assembly includes a plurality of reinforcing portions surrounding the groove.

In the foregoing technical solution, the plurality of reinforcing portions are configured, and the reinforcing portions correspond to one groove, which can improve the reinforcing effect on the strength and stiffness of the end cover, so that the end cover deforms little or does not deform when subjected to an external impact.

As an optional technical solution of the embodiments of the present application, the end cover assembly includes a plurality of grooves, where the reinforcing portion surrounds the plurality of grooves.

In the foregoing technical solution, the plurality of grooves are configured, and the grooves correspond to one reinforcing portion, which can reduce the weight of the end cover, so that the weight of the end cover is not significantly different or the same before and after the reinforcing portion is disposed.

In a second aspect, an embodiment of the present application further provides a battery cell, which includes an electrode assembly, a shell, and an end cover assembly; the shell has an accommodating space with an opening at one end for accommodating the electrode assembly; and the end cover is connected to the shell and closes the opening.

As an optional technical solution of the embodiments of the present application, the first surface faces the electrode assembly, the end cover assembly includes an insulating member disposed between the end cover and the electrode assembly, and the reinforcing portion abuts against the insulating member.

In the foregoing technical solution, the insulating member is disposed between the end cover and the electrode assembly to insulate the end cover and the electrode assembly, so as to prevent a short circuit caused by contact between the end cover and the electrode assembly. The reinforcing portion abuts against the insulating member, and when the end cover is impacted, the insulating member can achieve a buffering pressure reduction effect, so that the end cover deforms little and the problem of damage to the electrode assembly by the deformation of the end cover is alleviated.

In a third aspect, an embodiment of the present application further provides a battery, which includes a box and the foregoing battery cell, where the battery cell is accommodated in the box.

As an optional technical solution of the embodiments of the present application, the end cover is disposed on a side, near a bottom wall of the box, of the battery cell.

In the foregoing technical solution, the end cover is disposed on the side, near the bottom wall of the box, of the battery cell, that is, the battery cell is inverted inside the box.

In a fourth aspect, an embodiment of the present application further provides an electrical device, which includes the foregoing battery, where the battery is used for providing electrical energy.

### Brief Description of Drawings

In order to explain the technical solutions in the embodiments of the present application more clearly, accompanying drawings required to use in the embodiments will be simply introduced below. It should be understood that the following drawings show only some embodiments of the present application and should not be regarded as limiting the scope, and other relevant drawings may be obtained based on these drawings by those of ordinary skill in the art without any creative efforts.
FIG. 1 is a schematic structural diagram of a vehicle provided in some embodiments of the present application;
FIG. 2 is an exploded view of a battery provided in some embodiments of the present application;
FIG. 3 is an exploded structural diagram of a battery cell provided in some embodiments of the present application;
FIG. 4 is a schematic structural diagram of an end cover assembly provided in some embodiments of the present application;
FIG. 5 is a bottom view of the end cover assembly provided in some embodiments of the present application;
FIG. 6 is a top view of the end cover assembly provided in some embodiments of the present application;
FIG. 7 is a cross-sectional view of position A-A in FIG. 6;
FIG. 8 is an enlarged view of position B in FIG. 7;
FIG. 9 is a schematic structural diagram of an end cover assembly provided in other embodiments of the present application;
FIG. 10 is a bottom view of the end cover assembly provided in other embodiments of the present application;
FIG. 11 is a top view of the end cover assembly provided in other embodiments of the present application;
FIG. 12 is a cross-sectional view of position D-D in FIG. 11;
FIG. 13 is a bottom view of the end cover assembly (a reinforcing portion includes a plurality of reinforcing segments) provided in some embodiments of the present application;
FIG. 14 is a bottom view of the end cover assembly (a plurality of reinforcing portions correspond to one groove) provided in some embodiments of the present application; and
FIG. 15 is a bottom view of the end cover assembly (a plurality of grooves correspond to one reinforcing portion) provided in some embodiments of the present application.

Reference numerals: 10 - box; 11 - first portion; 12 - second portion; 20 - battery cell; 21 - end cover assembly; 211 - end cover; 2111 - first surface; 2112 - second surface; 2113 - mounting hole; 2114 - pressure relief hole; 212 - groove; 213 - reinforcing portion; 2131 - reinforcing segment; 214 - electrode terminal; 215 - pressure relief mechanism; 216 - convex portion; 217 - concave portion; 22 - electrode assembly; 23 - shell; 100 - battery; 200 - controller; 300 - motor; 1000 - vehicle.

### Detailed Description of Embodiments

To make the objectives, technical solutions and advantages of the embodiments of the present application clearer, the technical solutions in the embodiments of the present application will be described clearly below with reference to the accompanying drawings in the embodiments of the present application. Apparently, the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" in the specification and claims of the present application, the accompanying drawings, and any variations thereof, are intended to cover non-exclusive inclusion. The terms "first", "second", and the like in the specification and claims of the present application or the accompanying drawings are used to distinguish different objects, rather than to describe specific sequences or primary and secondary relationships.

The "embodiment" mentioned in the present application means that specific features, structures or characteristics described in conjunction with the embodiment may be included in at least one embodiment of the present application. The phrase at various locations in the specification does not necessarily refer to the same embodiment, or an independent or alternative embodiment exclusive of another embodiment.

In the description of the present application, it should be noted that, unless otherwise specified and defined, the terms "mounted", "connected", "connection", and "attached" should be broadly understood, for example, the "connection" may be a fixed connection, a detachable connection, an integral connection, a direct connection, a connection through a medium, or a communication of interiors of two elements. Those of ordinary skill in the art may understand the specific meanings of the above terms in the present application according to specific circumstances.

The term "and/or" in the present application is merely an association relationship for describing associated objects, and represents that three relationships may exist. For example, A and/or B may represent the following three cases: A exists alone, both A and B exist, and B exists alone. In addition, the character "/" in the present application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

In the present application, "a plurality of" means two (inclusive) or more.

In the present application, the battery cells may include lithium-ion secondary battery cells, lithium-ion primary battery cells, lithium-sulfur battery cells, sodium lithium-ion battery cells, sodium-ion battery cells, magnesium-ion battery cells, or the like, which are not limited by the embodiments of the present application. The battery cells may be cylindrical, flat, cuboid, or in other shapes, which is also not limited by the embodiments of the present application. The battery cells are generally divided into three types according to ways of packaging: cylindrical battery cells, square battery cells and soft package battery cells, which are also not limited in the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a box used for packaging one or more battery cells. The box may prevent liquid or other foreign matters from affecting charging or discharging of the battery cells.

The battery cell includes an electrode assembly and an electrolytic solution, and the electrode assembly is composed of a positive electrode sheet, a negative electrode sheet, and a separator. The battery cell mainly relies on migration of metal ions between the positive electrode sheet and the negative electrode sheet to work. The positive electrode sheet includes a positive electrode current collector and a positive electrode active material layer, a surface of the positive electrode current collector is coated with the positive electrode active material layer, and the positive electrode current collector not coated with the positive electrode active material layer protrudes from the positive electrode current collector coated with the positive electrode active material layer and is used as a positive electrode tab. In an example of a lithium-ion battery, a material of the positive electrode current collector may be aluminum, and a positive electrode active material may be lithium cobaltate, lithium iron phosphate, ternary lithium, lithium manganate, or the like. The negative electrode sheet includes a negative electrode current collector and a negative electrode active material layer, a surface of the negative electrode current collector is coated with the negative electrode active material layer, and the negative electrode current collector not coated with the negative electrode active material layer protrudes from the negative electrode current collector coated with the negative electrode active material layer and is used as a negative electrode tab. A material of the negative electrode current collector may be copper, and a negative electrode active material may be carbon, silicon, or the like. In order to ensure that no fusing occurs when high current passes through, there is a plurality of positive electrode tabs laminated together, and there is a plurality of negative electrode tabs laminated together. A material of the separator may be polypropylene (PP), polyethylene (PE), or the like. Moreover, the electrode assembly may be of a wound structure or a laminated structure, and the embodiments of the present application are not limited thereto.

At present, in view of the development of the market situation, use of batteries is increasingly widespread. Batteries are not only used in energy storage power systems such as hydropower, firepower, wind power, and solar power plants, but also widely used in electric vehicles such as electric bicycles, electric motorcycles, and electric cars, as well as in various fields such as military equipment and aerospace. With the continuous expansion of the application fields of batteries, their market demand is also increasing.

A battery cell includes an end cover, an electrode assembly, and a shell, where the end cover and the shell cooperate to form an internal environment of the battery cell, and the electrode assembly is accommodated in the internal environment. However, in a scenario where the battery cell is inverted, the electrode assembly is often damaged, leading to failure of the battery cell.

Further research by the inventor found, in the scenario where the battery cell is inverted, the end cover is more susceptible to external impact and deformation, and the deformation of the end cover easily leads to deformation of the electrode assembly by force, resulting in damage of the electrode assembly and failure of the battery cell.

In view of this, an embodiment of the present application provides an end cover assembly. The end cover assembly includes an end cover, a groove, and a reinforcing portion. The end cover has a first surface and a second surface opposite in its thickness direction, and the groove is recessed from the first surface in a direction towards the second surface. The reinforcing portion protrudes from the first surface and/or the second surface, and surrounds the groove.

In the end cover assembly, the reinforcing portion is disposed on the end cover to increase the strength and stiffness of the end cover and improve impact resistance of the end cover, so that the end cover deforms little when subjected to an impact, which alleviates damage to an electrode assembly by the deformation of the end cover. In addition, the groove is disposed in the end cover of the end cover assembly to reduce the weight of the end cover, so that the weight of the end cover is not significantly different or the same before and after the reinforcing portion is disposed. The reinforcing portion surrounds the groove to increase the stiffness and strength of a position where the groove is disposed, without significantly increasing the weight of the end cover assembly.

The technical solutions described in the embodiments of the present application are applicable to batteries and electrical devices using batteries.

The electrical device may be a vehicle, a mobile phone, a portable device, a notebook computer, a ship, a spacecraft, an electric toy, an electric tool, or the like. The spacecraft includes an airplane, a rocket, a space shuttle, a spaceship, or the like; the electric toy includes a fixed or mobile electric toy, such as a game console, an electric car toy, an electric ship toy, or an electric aircraft toy; and the electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer. The embodiments of the present application do not limit the foregoing electrical devices.

For convenient description, the following embodiments are described by an example of a vehicle 1000 as an electrical device.

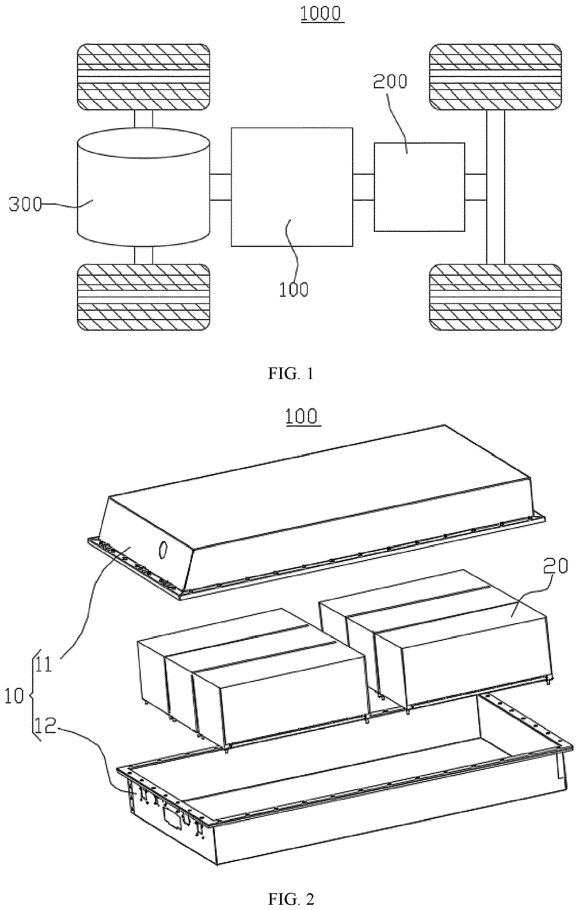

Referring to FIG. 1, FIG. 1 is a schematic structural diagram of a vehicle 1000 provided in some embodiments of the present application. The vehicle 1000 may be a fuel-powered vehicle, a gas-powered vehicle, or a new energy vehicle, and the new energy vehicle may be a battery electric vehicle, a hybrid vehicle, an extended-range vehicle, or the like. A battery 100 is disposed inside the vehicle 1000, and the battery 100 may be disposed at a bottom, head or tail of the vehicle 1000. The battery 100 may be used to supply power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Referring to FIG. 2, FIG. 2 is an exploded view of a battery 100 provided in some embodiments of the present application. The battery 100 includes a box 10 and battery cells 20, where the battery cells 20 are accommodated in the box 10. The box 10 is used for providing an accommodating space for the battery cells 20, and the box 10 may have many structures. In some embodiments, the box 10 may include a first portion 11 and a second portion 12, the first portion 11 and the second portion 12 cover each other, and the first portion 11 and the second portion 12 jointly confine the accommodating space for accommodating the battery cells 20. The second portion 12 may be of a hollow structure with an opening at one end, the first portion 11 may be of a plate-like structure, and the first portion 11 covers an open side of the second portion 12, so that the first portion 11 and the second portion 12 jointly confine the accommodating space; or each of the first portion 11 and the second portion 12 may be of a hollow structure with an open side, and the open side of the first portion 11 covers the open side of the second portion 12. Of course, the box 10 formed by the first portion 11 and the second portion 12 may be in various shapes, such as cylindrical or cuboid.

There may be a plurality of battery cells 20 in the battery 100, and the plurality of battery cells 20 may be in series connection, parallel connection, or series-parallel connection. The series-parallel connection refers to a combination of series connection and parallel connection in the plurality of battery cells 20. The plurality of battery cells 20 may be directly connected in series, in parallel, or in series and parallel together, and then the whole formed by the plurality of battery cells 20 is accommodated in the box 10. Of course, the battery 100 may alternatively be in a form of a battery module formed by first connecting the plurality of battery cells 20 in series, in parallel, or in series and parallel, and a plurality of battery modules are then connected in series, in parallel, or in series and parallel to form a whole accommodated in the box 10. The battery 100 may further include other structures, for example, the battery 100 may further include a current collecting component for achieving electrical connection between the plurality of battery cells 20.

Each battery cell 20 may be a secondary battery cell or a primary battery cell, or may be a lithium-sulfur battery cell, a sodium-ion battery cell, or a magnesium-ion battery cell, but is not limited to this. The battery cell 20 may be cylindrical, flat, cuboid, or in other shapes.

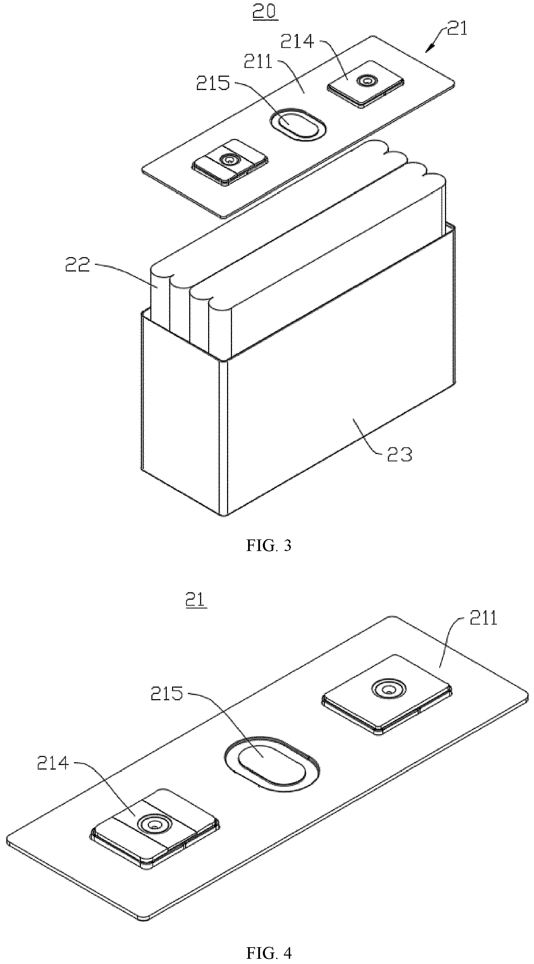

Referring to FIG. 3, FIG. 3 is an exploded structural diagram of a battery cell 20 provided in some embodiments of the present application. The battery cell 20 refers to a minimum unit that constitutes the battery 100. As shown in FIG. 3, the battery cell 20 includes an end cover assembly 21, an electrode assembly 22, and a shell 23.

The end cover assembly 21 includes an end cover 211, an electrode terminal 214, and a pressure relief mechanism 215. The end cover 211 refers to a component that is closed to an opening of the shell 23 to isolate an internal environment of the battery cell 20 from an external environment. Unlimitedly, a shape of the end cover 211 may adapt to that of the shell 23 to fit the shell 23. Optionally, the end cover 211 may be made of a material with certain hardness and strength (such as aluminum alloy). In this case, the end cover 211 is less prone to deformation during extrusion and deformation, so that the battery cell 20 can have higher structural strength and its safety can be improved. A material of the end cover 211 may be various, such as copper, iron, aluminum, stainless steel, aluminum alloy, or plastic, and is not specially limited in the embodiments of the present application. The electrode terminal 214 is disposed on the end cover 211. The electrode terminal 214 may be used for electrical connection with the electrode assembly 22 to output or input electrical energy of the battery cell 20. The pressure relief mechanism 215 is disposed on the end cover 211, and the pressure relief mechanism 215 is used for opening when internal pressure or temperature of the battery cell 20 reaches a detonation pressure to release the internal pressure of the battery cell 20. In some embodiments, the end cover assembly 21 further includes an insulating member, which is disposed on an inner side of the end cover 211 and may be used for isolating electrical connection components inside the shell 23 from the end cover 211 to reduce a risk of short-circuiting. For example, the insulating member may be made of plastic, rubber, or the like.

The shell 23 is a component fitting the end cover 211 to form an internal environment of the battery cell 20, where the formed internal environment may be used for accommodating the electrode assembly 22, an electrolytic solution, and other components. The shell 23 and the end cover 211 may be independent components, the shell 23 may be provided with an opening, and the cover body 211 is closed to the opening to form the internal environment of the battery cell 20. Unlimitedly, the end cover 211 and the shell 23 may be integrated. Specifically, the end cover 211 and the shell 23 may form a common connection surface before other components are put into the shell. When the interior of the shell 23 is to be encapsulated, the end cover 211 is closed to the shell 23. The shell body 23 may be in various shapes and sizes, such as cuboid, cylinder, or hexagonal prism. Specifically, the shape of the shell body 23 may be determined according to a specific shape and size of the electrode assembly 22. A material of the shell body 23 may be various, such as copper, iron, aluminum, stainless steel, aluminum alloy, or plastic, and is not specially limited in the embodiments of the present application.

The electrode assembly 22 is a component that undergoes electrochemical reactions in the battery cell 20. The shell 23 may contain one or more electrode assemblies 22. The electrode assembly 22 is mainly formed by winding or laminating a positive electrode sheet and a negative electrode sheet, and a separator is usually disposed between the positive electrode sheet and the negative electrode sheet. Portions of the positive electrode sheet and the negative electrode sheet that contain active materials constitute a main body of the electrode assembly 22, while portions of the positive electrode sheet and the negative electrode sheet that do not contain active materials constitute respective tabs. The positive electrode tab and the negative electrode tab may be located at one end of the main body or at two ends of the main body separately. In charging and discharging processes of the battery 100, positive and negative electrode active materials react with the electrolytic solution, and the tabs are connected to the electrode terminals 214 to form a current circuit.

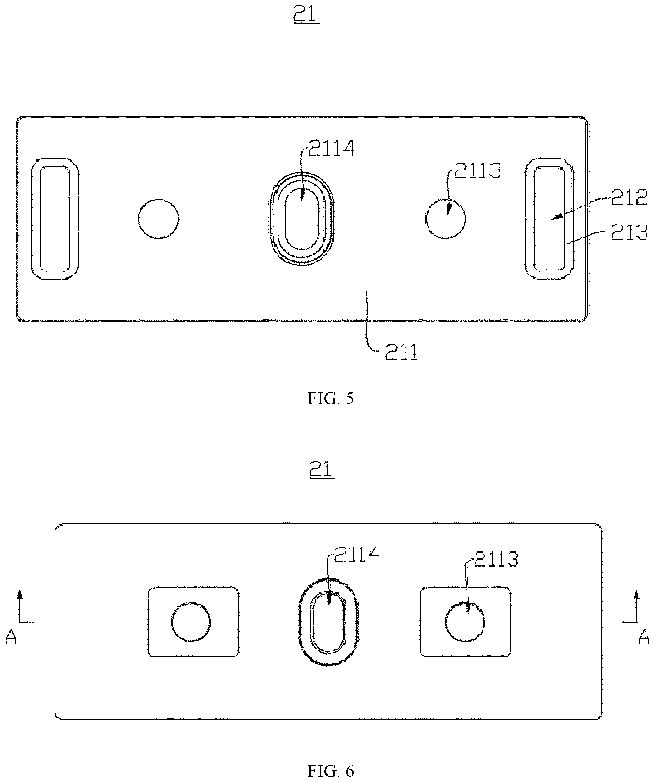

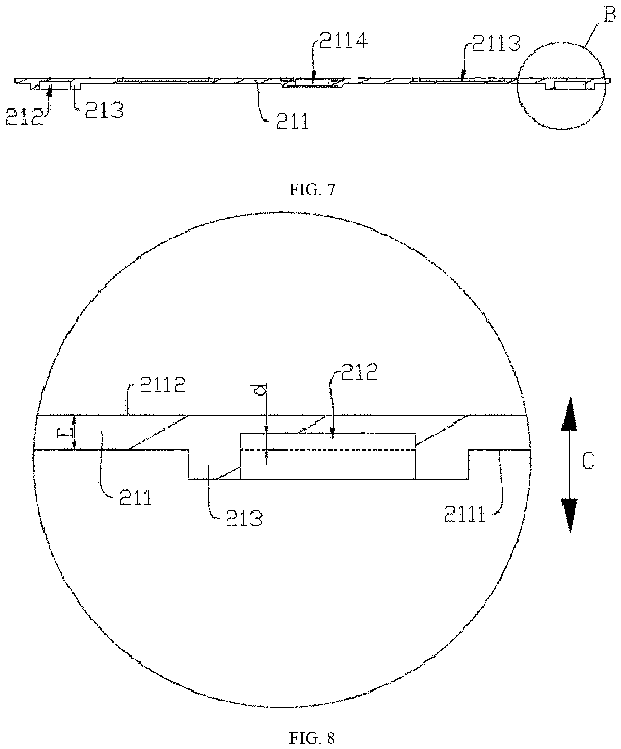

Referring to FIGs. 4, 5, 6, 7, and 8, FIG. 4 is a schematic structural diagram of the end cover assembly 21 provided in some embodiments of the present application. FIG. 5 is a bottom view of the end cover assembly 21 provided in some embodiments of the present application. FIG. 6 is a top view of the end cover assembly 21 provided in some embodiments of the present application. FIG. 7 is a cross-sectional view of position A-A in FIG. 6. FIG. 8 is an enlarged view of position B in FIG. 7. An embodiment of the present application provides an end cover assembly 21. The end cover assembly 21 includes an end cover 211, a groove 212, and a reinforcing portion 213. The end cover 211 has a first surface 2111 and a second surface 2112 opposite in its thickness direction, and the groove 212 is recessed from the first surface 2111 in a direction towards the second surface 2112. The reinforcing portion 213 protrudes from the first surface 2111 and/or the second surface 2112, and surrounds the groove 212.

The thickness direction is indicated by a double-headed arrow C in FIG. 8.

The first surface 2111 and the second surface 2112 are two surfaces opposite in the thickness direction of the end cover 211. One of the first surface 2111 and the second surface 2112 is an inner surface of the end cover 211, and the other is an outer surface of the end cover 211. The inner surface refers to a surface, facing the interior of the shell 23, of the end cover 211, and the outer surface refers to a surface, away from the shell 23, of the end cover 211. When the first surface 2111 is the inner surface, the second surface 2112 is the outer surface. When the second surface 2112 is the outer surface, the first surface 2111 is the inner surface.

The groove 212 refers to a groove structure that penetrates the first surface 2111 of the end cover 211 and extends from the first surface 2111 to the second surface 2112. A shape of the groove 212 is not limited, for example, the groove 212 may be either rectangular or circular.

The reinforcing portion 213 is of a raised structure protruding from the end cover 211. The reinforcing portion 213 may protrude from the first surface 2111 or the second surface 2112. When the reinforcing portion 213 protrudes from the first surface 2111, the reinforcing portion 213 and the groove 212 are located on the same side of the end cover 211. When the reinforcing portion 213 protrudes from the second surface 2112, the reinforcing portion 213 and the groove 212 are located on two sides of the end cover 211.

"The reinforcing portion 213 surrounds the groove 212" includes that the reinforcing portion 213 half surrounds the groove 212 and the reinforcing portion 213 completely surrounds the groove 212. An inner surface of the reinforcing portion 213 and an inner wall of the groove 212 may be coplanar, for example, the inner surface of the reinforcing portion 213 is flush with the inner wall of the groove 212. The inner surface of the reinforcing portion 213 and the inner wall of the groove 212 may alternatively be non-coplanar, for example, in a length direction of the end cover 211, there is a gap between the inner surface of the reinforcing portion 213 and the inner wall of the groove 212.

The reinforcing portion 213 may be in various shapes. For example, the reinforcing portion 213 is in a runway shape or rectangle, and the reinforcing portion 213 half surrounds the groove 212. For example, the reinforcing portion 213 is a U-shaped protrusion extending along a U-shaped trajectory, and the reinforcing portion 213 half surrounds the groove 212.

In the end cover assembly 21, the reinforcing portion 213 is disposed on the end cover 211 to increase the strength and stiffness of the end cover 211 and improve impact resistance of the end cover 211, so that the end cover 211 deforms little when subjected to an impact, which alleviates damage to an electrode assembly 22 by the deformation of the end cover 211. In addition, the groove 212 is disposed in the end cover 211 of the end cover assembly 21 to reduce the weight of the end cover 211, so that the weight of the end cover 211 is not significantly different or the same before and after the reinforcing portion 213 is disposed. The reinforcing portion 213 surrounds the groove 212 to increase the stiffness and strength of a position where the groove 212 is disposed, without significantly increasing the weight of the end cover assembly 21.

In some embodiments, a mounting hole 2113 and a pressure relief hole 2114 are disposed on the end cover 211, where the mounting hole 2113 is used for mounting the electrode terminal 214, and the pressure relief hole 2114 is used for disposing the pressure relief mechanism 215.

In some embodiments, in the thickness direction, the distance between the first surface 2111 and the second surface 2112 is D, and the distance between a bottom surface of the groove 212 and the first surface 2111 is d, satisfying 0.1 ≤ d/D ≤ 0.6.

In the thickness direction, the distance between the first surface 2111 and the second surface 2112 may also be understood as a thickness of the end cover 211. In the thickness direction, the distance between the bottom surface of the groove 212 and the first surface 2111 may also be understood as a depth of the groove 212. "0.1 ≤ d/D ≤ 0.6" indicates that the depth of the groove 212 is 0.1-0.6 times the thickness of the end cover 211.

It should be noted that the dashed line shown in FIG. 8 is in the same plane as the first surface 2111, and a range of the groove 212 is enclosed by the bottom wall and side walls of the groove 212 and the dashed line in FIG. 8. The dashed line facilitates representation of the actual range of the groove 212 and marking of the distance d between the bottom surface of the groove 212 and the first surface 2111, so the dashed line does not represent actual physical features.

The depth of the groove 212 is 0.1-0.6 times the thickness of the end cover 211, which achieves a good weight reduction effect and does not significantly weaken the strength of the end cover 211. If d/D < 0.1, the groove 212 is shallow and the weight reduction effect is poor. If d/D > 0.6, the groove 212 is deep, and much strength of the end cover 211 is weakened, resulting in poor strength of the end cover 211 even if the reinforcing portion 213 is disposed.

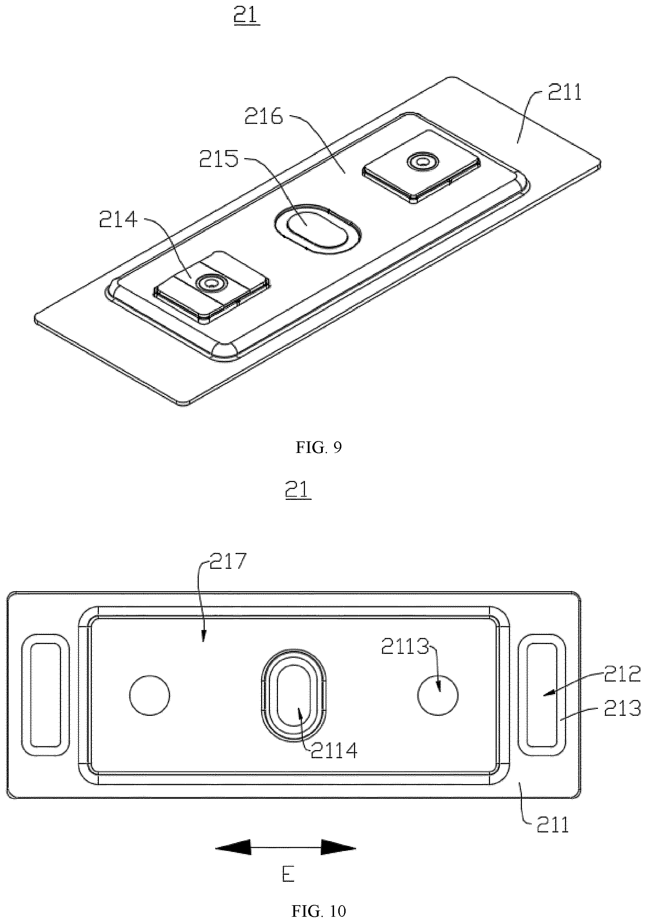

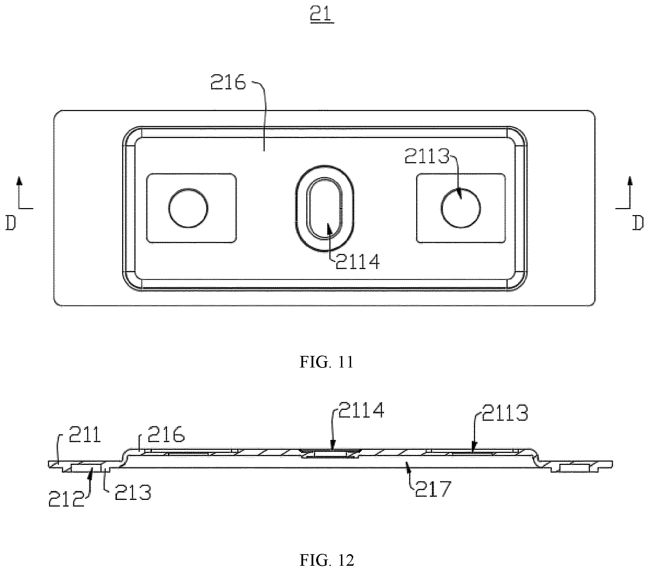

Referring to FIGs. 9, 10, 11, and 12, FIG. 9 is a schematic structural diagram of an end cover assembly 21 provided in other embodiments of the present application. FIG. 10 is a bottom view of the end cover assembly 21 provided in other embodiments of the present application. FIG. 11 is a top view of the end cover assembly 21 provided in other embodiments of the present application. FIG. 12 is a cross-sectional view of position D-D in FIG. 11. In other embodiments, the end cover 211 is provided with a convex portion 216 and a concave portion 217, the convex portion 216 protrudes from the second surface 2112, the concave portion 217 is recessed from the first surface 2111 in a direction towards the second surface 2112, and the concave portion 217 corresponds to the convex portion 216. In the thickness direction, projections of the convex portion 216 and the reinforcing portion 213 on the end cover 211 do not overlap.

The convex portion 216 is of a raised structure protruding from the second surface 2112. The concave portion 217 refers to a groove structure that penetrates the first surface 2111 of the end cover 211 and extends from the first surface 2111 to the second surface 2112.

"The concave portion 217 corresponds to the convex portion 216" indicates that, in the thickness direction, a projection of a contour of the groove 212 on the end cover 211 completely falls within a projection range of the convex portion 216 on the end cover 211, or the projection of the convex portion 216 on the end cover 211 completely falls within a projection range of the contour of the groove 212 on the end cover 211. In some embodiments, the projection of the contour of the groove 212 on the end cover 211 completely overlaps with the projection of the convex portion 216 on the end cover 211.

In some embodiments, the concave portion 217 penetrates the second surface 2112 and extends into the convex portion 216.

"In the thickness direction, projections of the convex portion 216 and the reinforcing portion 213 on the end cover 211 do not overlap" indicates that the reinforcing portion 213 and the convex portion 216 are spaced or misaligned in a plane perpendicular to the thickness direction.

The convex portion 216 is formed on the second surface 2112, and the concave portion 217 is formed at a position corresponding to the convex portion 216 on the first surface 2111. On the one hand, the concave portion 217 can accommodate the components inside the battery cell 20, which is beneficial to increasing the energy density of the battery cell 20. On the other hand, the convex portion 216 can increase the flexural strength of the end cover 211 and improve the impact resistance of the end cover 211. In the thickness direction, the projections of the convex portion 216 and the reinforcing portion 213 on the end cover 211 do not overlap to increase the strength and stiffness of different positions of the end cover 211, and to improve the impact resistance of the end cover 211, so as to alleviate damage to the electrode assembly 22 by the deformation of the end cover 211.

In some embodiments, the end cover assembly 21 includes an electrode terminal 214, and the electrode terminal 214 is disposed on the convex portion 216.

The electrode terminal 214 is a component used for electrical connection with the electrode assembly 22 to output or input electrical energy of the battery cell 20. The convex portion 216 is provided with a mounting hole 2113, and the electrode terminal 214 partially penetrates the mounting hole 2113.

The electrode terminal 214 may be electrically connected to the electrode assembly 22 inside the battery cell 20. The electrode terminal 214 is disposed on the convex portion 216, so that the electrode assembly 22 is partially accommodated in the concave portion 217 to increase the energy density of the battery cell 20. In addition, the electrode terminal 214 disposed on the convex portion 216 with strong impact resistance is less susceptible to damage due to the deformation of the end cover 211.

In some embodiments, the reinforcing portions 213 are disposed on two sides of the convex portion 216 in a first direction, the first direction being perpendicular to the thickness direction.

The first direction is any direction perpendicular to the thickness direction. For example, the first direction may be the length direction of the end cover 211, or the first direction may be the width direction of the end cover 211. In this embodiment, the first direction is in an E direction indicated by a double-headed arrow in FIG. 10.

"The reinforcing portions 213 are disposed on two sides of the convex portion 216" indicates that the end cover assembly 21 includes a plurality of reinforcing portions 213, and the plurality of reinforcing portions 213 are disposed on the two sides of the convex portion 216 in the first direction, respectively.

The reinforcing portions 213 are disposed on the two sides of the convex portion 216 in the first direction to increase the strength and stiffness of the end cover 211 and improve the impact resistance of the end cover 211, so that the end cover 211 deforms little when subjected to an impact, which alleviates damage to the electrode assembly 22 by the deformation of the end cover 211.

In some embodiments, the first direction is the length direction of the end cover 211.

Compared with the width direction of the end cover 211, the length direction of the end cover 211 is more prone to deformation due to impact. The reinforcing portions 213 are disposed on the two sides of the convex portion 216 in the length direction to reinforce the impact resistance of the end cover 211 in the length direction, so as to alleviate damage to the electrode assembly 22 by the deformation of the end cover 211.

In some embodiments, the end cover assembly 21 includes a pressure relief mechanism 215, and the pressure relief mechanism 215 is disposed on the end cover 211. In the thickness direction, projections of the pressure relief mechanism 215 and the reinforcing portion 213 on the end cover 211 do not overlap.

The pressure relief mechanism 215 can open when the internal pressure of the battery cell 20 reaches a detonation pressure to release the internal pressure of the battery cell 20.

"In the thickness direction, projections of the pressure relief mechanism 215 and the reinforcing portion 213 on the end cover 211 do not overlap" indicates that the pressure relief mechanism 215 and the reinforcing portion 213 are spaced or misaligned in a plane perpendicular to the thickness direction.

The projections of the pressure relief mechanism 215 and the reinforcing portion 213 on the end cover 211 in the thickness direction do not overlap, so that the pressure relief mechanism 215 and the reinforcing portion 213 do not interfere with each other to prevent the reinforcing portion 213 from affecting the pressure relief function of the pressure relief mechanism 215.

In some embodiments, the reinforcing portion 213 is of a continuous structure disposed in a circumferential direction of the groove 212.

"The reinforcing portion 213 is of a continuous structure disposed in a circumferential direction of the groove 212" may also be understood as the reinforcing portion 213 is of a closed structure extending along a closed trajectory and the reinforcing portion 213 surrounds the groove 212. The closed trajectory is a trajectory with two ends connected to each other, such as a rectangular trajectory or an elliptical trajectory. In some embodiments, the reinforcing portion 213 is of a runway-shaped raised structure. In other embodiments, the reinforcing portion 213 is of a rectangular raised structure.

The reinforcing portion 213 is of a continuous structure disposed in the circumferential direction of the groove 212, so that the reinforcing portion 213 has better entirety and good reinforcing effect.

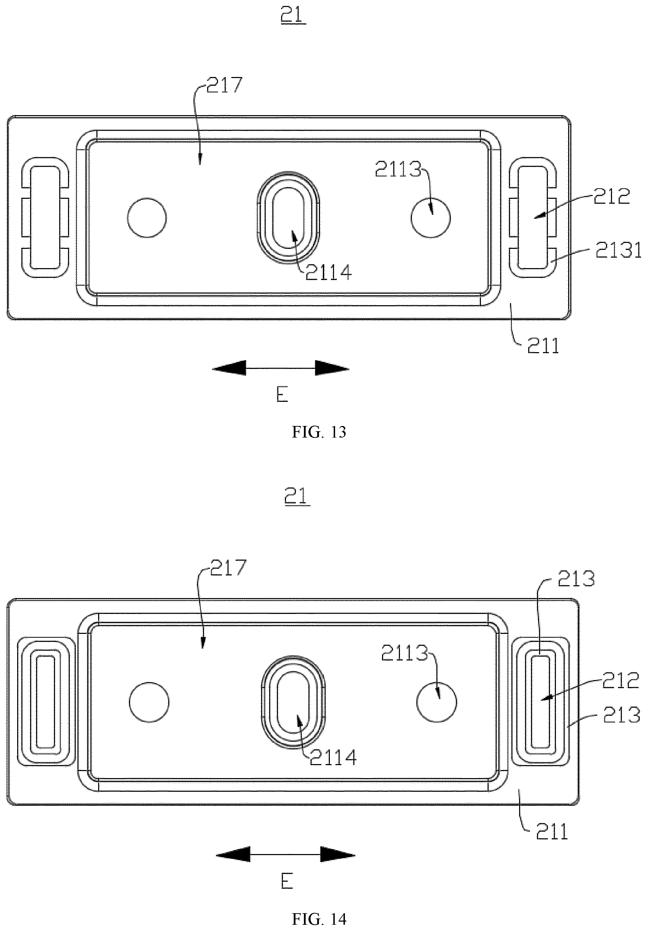

Referring to FIG. 13, FIG. 13 is a bottom view of the end cover assembly 21 (the reinforcing portion 213 includes a plurality of reinforcing segments 2131) provided in some embodiments of the present application. In some embodiments, the reinforcing portion 213 is of a discontinuous structure disposed in the circumferential direction of the groove 212.

"The reinforcing portion 213 is of a discontinuous structure disposed in the circumferential direction of the groove 212" may be understood that the reinforcing portion 213 includes a plurality of portion, which surround the groove 212.

The reinforcing portion 213 is of a discontinuous structure disposed in the circumferential direction of the groove 212, so that the reinforcing portion 213 can avoid other components and will not interfere with the other components.

With reference to FIG. 13, in some embodiments, the reinforcing portion 213 includes a plurality of reinforcing segments 2131, and the plurality of reinforcing segments 2131 are spaced circumferentially.

The reinforcing segment 2131 is a part of the reinforcing portion 213, the plurality of reinforcing segments 2131 form the reinforcing portion 213, and the reinforcing segments 2131 are located on the circumference of the groove 212.

By configuring the plurality of reinforcing segments 2131, the reinforcing segments 2131 increases the strength and stiffness of the end cover 211 and can avoid other components of the battery cell 20 to avoid interference with the other components. In addition, the plurality of reinforcing segments 2131 are lighter than the continuous structure, which is beneficial to increasing the strength and stiffness of the end cover assembly 21 without significantly increasing its weight.

In some embodiments, the end cover assembly 21 includes a plurality of grooves 212, and the reinforcing portions 213 correspond to the grooves 212 one to one.

"The reinforcing portions 213 correspond to the grooves 212 one to one" refers to a one-to-one relationship between the reinforcing portions 213 and the grooves 212. A reinforcing portion 213 correspondingly surrounds a groove 212.

The plurality of reinforcing portions 213 and the plurality of grooves 212 improve the reinforcing effect on the strength and stiffness of the end cover 211.

Referring to FIG. 14, FIG. 14 is a bottom view of the end cover assembly 21 (a plurality of reinforcing portions 213 correspond to one groove 212) provided in some embodiments of the present application. In some embodiments, the end cover assembly 21 includes a plurality of reinforcing portions 213, and the plurality of reinforcing portions 213 surround the groove 212.

There is a many-to-one relationship between the reinforcing portions 213 and the groove 212, where the plurality of reinforcing portions 213 surround the same groove 212. As shown in FIG. 14, two reinforcing portions 213 jointly surround a groove 212.

The plurality of reinforcing portions 213 are configured, and the reinforcing portions 213 correspond to one groove 212, which can improve the reinforcing effect on the strength and stiffness of the end cover 211, so that the end cover 211 deforms little or does not deform when subjected to an external impact.

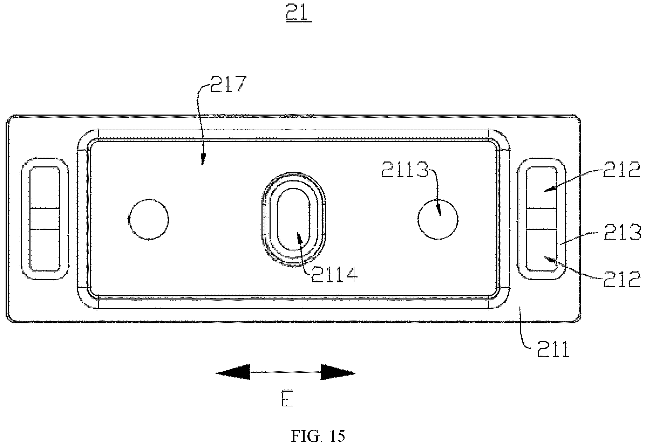

Referring to FIG. 15, FIG. 15 is a bottom view of the end cover assembly 21 (a plurality of grooves 212 correspond to one reinforcing portion 213) provided in some embodiments of the present application. In some embodiments, the end cover assembly 21 includes a plurality of grooves 212, and the reinforcing portion 213 surrounds the plurality of grooves 212.

There is a many-to-one relationship between the grooves 212 and the reinforcing portion 213, where one reinforcing portion 213 surrounds the plurality of grooves 212. As shown in FIG. 15, a reinforcing portion 213 surrounds two grooves 212.

The plurality of grooves 212 are configured, and the grooves 212 correspond to one reinforcing portion 213, which can reduce the weight of the end cover 211, so that the weight of the end cover 211 is not significantly different or the same before and after the reinforcing portion 213 is disposed.

An embodiment of the present application further provides a battery cell 20. The battery cell 20 includes an electrode assembly 22, a shell 23, and the foregoing end cover assembly 21. The shell 23 has an accommodating space with an opening at one end for accommodating the electrode assembly 22. The end cover 211 is connected to the shell 23 and closes the opening.

In some embodiments, the first surface 2111 faces the electrode assembly 22, and the end cover assembly 21 includes an insulating member disposed between the end cover 211 and the electrode assembly 22. The reinforcing portion 213 abuts against the insulating member.

"The first surface 2111 faces the electrode assembly 22" indicates that the first surface 2111 is the inner surface of the end cover 211.

The insulating member is made of a material with insulating properties, such as plastic or rubber. The insulating member is used for insulating the end cover 211 and the electrode assembly 22 from each other, to avoid a short circuit of the battery cell 20 due to the electrical connection between the end cover 211 and the electrode assembly 22.

The insulating member is disposed between the end cover 211 and the electrode assembly 22 to insulate the end cover 211 and the electrode assembly 22, so as to prevent a short circuit caused by contact between the end cover 211 and the electrode assembly 22. The reinforcing portion 213 abuts against the insulating member, and when the end cover 211 is impacted, the insulating member can achieve a buffering pressure reduction effect, so that the end cover 211 deforms little and the problem of damage to the electrode assembly 22 by the deformation of the end cover 211 is alleviated.

An embodiment of the present application further provides a battery 100. The battery 100 includes a box 10 and the foregoing battery cell 20, and the battery cell 20 is accommodated in the box 10.

In some embodiments, the end cover 211 is disposed on a side, near a bottom wall of the box 10, of the battery cell 20.

The bottom wall of the box 10 is a wall opposite to an open end of the box 10.

The end cover 211 is disposed on the side, near the bottom wall of the box 10, of the battery cell 20, that is, the battery cell 20 is inverted inside the box 10.

An embodiment of the present application further provides an electrical device. The electrical device includes the foregoing battery 100, where the battery 100 is used for providing electrical energy.

According to some embodiments of the present application, referring to FIGs. 4 to 8.

An embodiment of the present application provides an end cover assembly 21. The end cover assembly 21 includes an end cover 211, a groove 212, and a reinforcing portion 213. The end cover 211 has a first surface 2111 and a second surface 2112 opposite in its thickness direction, and the groove 212 is recessed from the first surface 2111 in a direction towards the second surface 2112. The reinforcing portion 213 protrudes from the first surface 2111 and surrounds the groove 212. In a thickness direction, the distance between the first surface 2111 and the second surface 2112 is D, and the distance between a bottom surface of the groove 212 and the first surface 2111 is d, satisfying 0.1 ≤ d/D ≤ 0.6.

The end cover 211 is provided with a convex portion 216 and a concave portion 217, the convex portion 216 protrudes from the second surface 2112, the concave portion 217 is recessed from the first surface 2111 in a direction towards the second surface 2112, and the concave portion 217 corresponds to the convex portion 216. In the thickness direction, projections of the convex portion 216 and the reinforcing portion 213 on the end cover 211 do not overlap. In a length direction of the end cover 211, the reinforcing portions 213 are disposed on two sides of the convex portion 216.

In the end cover assembly 21, the reinforcing portion 213 is disposed on the end cover 211 to increase the strength and stiffness of the end cover 211 and improve impact resistance of the end cover 211, so that the end cover 211 deforms little when subjected to an impact, which alleviates damage to an electrode assembly 22 by the deformation of the end cover 211. In addition, the groove 212 is disposed in the end cover 211 of the end cover assembly 21 to reduce the weight of the end cover 211, so that the weight of the end cover 211 is not significantly different or the same before and after the reinforcing portion 213 is disposed. The reinforcing portion 213 surrounds the groove 212 to increase the stiffness and strength of a position where the groove 212 is disposed, without significantly increasing the weight of the end cover assembly 21. In the thickness direction, the distance between the first surface 2111 and the second surface 2112 may also be understood as a thickness of the end cover 211. In the thickness direction, the distance between the bottom surface of the groove 212 and the first surface 2111 may also be understood as a depth of the groove 212. The depth of the groove 212 is 0.1-0.6 times the thickness of the end cover 211. This achieves a good weight reduction effect and does not significantly weaken the strength of the end cover 211. If d/D < 0.1, the groove 212 is shallow and the weight reduction effect is poor. If d/D > 0.6, the groove 212 is deep, and much strength of the end cover 211 is weakened, resulting in poor strength of the end cover 211 even if the reinforcing portion 213 is disposed.

The convex portion 216 is formed on the second surface 2112, and the concave portion 217 is formed at a position corresponding to the convex portion 216 on the first surface 2111. On the one hand, the concave portion 217 can accommodate the components inside the battery cell 20, which is beneficial to increasing the energy density of the battery cell 20. On the other hand, the convex portion 216 can increase the flexural strength of the end cover 211 and improve the impact resistance of the end cover 211. The projections of the reinforcing portion 213 and the convex portion 216 on the end cover 211 in the thickness direction do not overlap, that is, the reinforcing portion 213 and the convex portion 216 are spaced or misaligned on the surface of the end cover 211, to increase the strength and stiffness of different positions of the end cover 211, and to improve the impact resistance of the end cover 211, so as to alleviate damage to the electrode assembly 22 by the deformation of the end cover 211. The reinforcing portions 213 are disposed on the two sides of the convex portion 216 in the length direction of the end cover 211 to increase the strength and stiffness of the end cover 211 and improve the impact resistance of the end cover 211, so that the end cover 211 deforms little when subjected to an impact, which alleviates damage to the electrode assembly 22 by the deformation of the end cover 211.

Described above are merely preferred embodiments of the present application, and the present application is not limited thereto. Various modifications and variations may be made to the present application for those skilled in the art. Any modifications, equivalent substitutions, improvements, and the like made within the spirit and principle of the present application shall fall within the protection scope of the present application.

## Claims

1. An end cover assembly, comprising:
an end cover, having a first surface and a second surface opposite in its thickness direction;
a groove, recessed from the first surface in a direction towards the second surface; and
a reinforcing portion, protruding from the first surface and/or the second surface and
surrounding the groove.

2. The end cover assembly according to claim 1, wherein in the thickness direction, a distance between the first surface and the second surface is D, and a distance between a bottom surface of the groove and the first surface is d, wherein 0.1 ≤ d/D ≤ 0.6.

3. The end cover assembly according to claim 1, wherein the end cover is provided with a convex portion and a concave portion, the convex portion protrudes from the second surface, the concave portion is recessed from the first surface in the direction towards the second surface, and the concave portion corresponds to the convex portion; and
in the thickness direction, projections of the convex portion and the reinforcing portion on the end cover do not overlap.

4. The end cover assembly according to claim 3, wherein the end cover assembly comprises an electrode terminal disposed on the convex portion.

5. The end cover assembly according to claim 3 or 4, wherein reinforcing portions are disposed on two sides of the convex portion in a first direction, with the first direction being perpendicular to the thickness direction.

6. The end cover assembly according to claim 5, wherein the first direction is a length direction of the end cover.

7. The end cover assembly according to any one of claims 1-6, wherein the end cover assembly comprises:
a pressure relief mechanism, disposed on the end cover, wherein in the thickness direction, projections of the pressure relief mechanism and the reinforcing portion on the end cover do not overlap.

8. The end cover assembly according to any one of claims 1-7, wherein the reinforcing portion is of a continuous structure disposed in a circumferential direction of the groove.

9. The end cover assembly according to any one of claims 1-7, wherein the reinforcing portion is of a discontinuous structure disposed in a circumferential direction of the groove.

10. The end cover assembly according to claim 9, wherein the reinforcing portion comprises a plurality of reinforcing segments spaced in the circumferential direction.

11. The end cover assembly according to any one of claims 1-10, wherein the end cover assembly comprises:
a plurality of grooves, wherein reinforcing portions correspond to the grooves one to one.

12. The end cover assembly according to any one of claims 1-10, wherein the end cover assembly comprises:
a plurality of reinforcing portions, each surrounding the groove.

13. The end cover assembly according to any one of claims 1-10, wherein the end cover assembly comprises:
a plurality of grooves, wherein the reinforcing portion surrounds the plurality of grooves.

14. A battery cell, comprising:
an electrode assembly;
a shell, having an accommodating space with an opening at one end for accommodating the electrode assembly; and
the end cover assembly according to any one of claims 1-13, wherein the end cover is connected to the shell and closes the opening.

15. The battery cell according to claim 14, wherein the first surface faces the electrode assembly, and the end cover assembly comprises:
an insulating member, disposed between the end cover and the electrode assembly, wherein the reinforcing portion abuts against the insulating member.

16. A battery, comprising:
a box; and
the battery cell according to claim 14 or 15, wherein the battery cell is accommodated in the box.

17. The battery according to claim 16, wherein the end cover is disposed on a side, near a bottom wall of the box, of the battery cell.

18. An electrical device, comprising the battery according to claim 16 or 17, wherein the battery is configured for providing electrical energy.
